# EUROPEAN PATENT SPECIFICATION

(11) **EP 4 350 631 B1**
(45) Date of publication and mention of the grant of the patent: **04.11.2026**
(21) Application number: 23179593.1
(22) Date of filing: 15.06.2023
(51) Int. Cl.: G06V 20/64, G06V 10/82, G06V 10/70, G06T 15/20, G06T 15/08, G06T 17/00

(54) **DEVICE AND METHOD WITH TWO-DIMENSIONAL SCENE RECONSTRUCTION FOR DYNAMIC THREE-DIMENSIONAL SPACE**
VORRICHTUNG UND VERFAHREN MIT ZWEIDIMENSIONALER SZENENREKONSTRUKTION FÜR DYNAMISCHEN DREIDIMENSIONALEN RAUM
DISPOSITIF ET PROCÉDÉ DE RECONSTRUCTION DE SCÈNE BIDIMENSIONNELLE POUR ESPACE TRIDIMENSIONNEL DYNAMIQUE

(30) Priority: 07.10.2022 KR 20220128992; 29.12.2022 KR 20220188992
(43) Date of publication of application: 10.04.2024
(73) Proprietor: Samsung Electronics Co., Ltd., Suwon-si, Gyeonggi-do 16677 (KR)
(72) Inventor: PARK, Sungheon, 16678 Suwon-si (KR); SON, Minjung, 16678 Suwon-si (KR); KANG, Nahyup, 16678 Suwon-si (KR); KIM, Jiyeon, 16678 Suwon-si (KR); JANG, Seokhwan, 16678 Suwon-si (KR)
(74) Representative: Marks & Clerk LLP

(56) References cited:
- WO-A2-2022/164895
- LOMBARDI STEPHEN ET AL: "Neural volumes : learning dynamic renderable volumes from images", vol. 38, no. 4, 31 August 2019 (2019-08-31), US, pages 1 - 14, XP093141489, ISSN: 0730-0301, Retrieved from the Internet <URL:https://arxiv.org/pdf/1906.07751.pdf> [retrieved on 20240314]
- WANG QIANQIAN ET AL: "IBRNet: Learning Multi-View Image-Based Rendering", 2021 IEEE/CVF CONFERENCE ON COMPUTER VISION AND PATTERN RECOGNITION (CVPR), IEEE, 20 June 2021 (2021-06-20), pages 4688 - 4697, XP034008794, DOI: 10.1109/CVPR46437.2021.00466

## Description

### BACKGROUND

### 1. Field

The following description relates to reconstruction of a two-dimensional scene for a dynamic three-dimensional space.

### 2. Description of Related Art

A fundamental goal of computer graphics is photorealistic image synthesis. Methods and representations for mimicking an imaging model of a real camera, including complex materials and global illumination processing, have been developed. These methods simulate light propagation from a light source to a virtual camera for synthesis based on laws of physics. For this, all relevant physical parameters of a scene need to be determined in a rendering process. For example, the parameters may include information about scene geometry and material properties such as reflectivity or opacity. When such information is provided, the latest ray tracing techniques may generate photorealistic images. In addition to the physics-based rendering methods, there are various techniques, based on mathematical approximation, that produce results that are close to real imaging models.

Lombardi Stephen et al. (Neural volumes : learning dynamic renderable volumes from images, DOI10.1145/3306346.3323020) discloses a learning-based approach to representing dynamic object inspired by the integral projection model used in tomographic imaging. The approach is supervised directly from 2D images in a multi-view capture setting and does not require explicit reconstruction or tracking of the object.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an electronic device is provided according to claim 1. The electronic device includes one or more processors and a memory storing a first feature extraction model, a second feature extraction model, a scene information estimation model, and instructions configured to, when executed by the one or more processors, cause the one or more processors to: from point information and time information, extract, by the first feature extraction model, first feature data for a target point indicated by the point information in a three-dimensional (3D) space at a target time instant corresponding to the time information; from the point information and the time information, extract, by the second feature extraction model, second feature data for the target point in the 3D space at the target time instant; obtain spacetime feature data based on the first feature data and the second feature data; and generate, by the scene information estimation model, scene information on the target point at the target time instant from the spacetime feature data and a view direction.

The instructions may be further configured to cause the one or more processors to perform interpolation based on the first feature data and the second feature data, and obtain the spacetime feature data based on a result of the interpolation.

The first feature extraction model may be a model trained for a 3D space at a first reference time instant, and the second feature extraction model may be a model trained for a 3D space at a second reference time instant that is different from the first reference time instant.

The instructions may be further configured to cause the one or more processors to determine the spacetime feature data based on interpolation of the first feature data and the second feature data based on a first reference time instant, a second reference time instant, and the target time instant.

The instructions may be further configured to cause the one or more processors to perform the interpolation by applying a first weight determined based on the first reference time instant and the target time instant to the second feature data, and applying a second weight determined based on the second reference time instant and the target time instant to the first feature data.

The instructions may be further configured to cause the one or more processors to determine a first weight based on a time difference between the first reference time instant and the target time instant, and determine a second weight based on a time difference between the second reference time instant and the target time instant.

The instructions may be further configured to cause the one or more processors to generate default feature interpolation data based on the first feature data and the second feature data, and determine the spacetime feature data based on the feature interpolation data and additional feature interpolation data corresponding to an additional level of detail (LOD).

The instructions may be further configured to cause the one or more processors to determine the spacetime feature data by concatenating the default feature interpolation data and the additional feature interpolation data.

The instructions may be further configured to cause the one or more processors to extract pieces of additional feature data corresponding to the target time instant and the target point based on a plurality of additional feature extraction models corresponding to the additional LOD, and generate the additional feature interpolation data based on the pieces of the extracted additional feature data.

The instructions may be further configured to cause the one or more processors to select two additional feature extraction models from among the plurality of additional feature extraction models based on the target time instant, and extract the pieces of the additional feature data by using the selected two additional feature extraction models.

The instructions are further configured to cause the one or more processors to select the first feature extraction model and the second feature extraction model from among three or more default feature extraction models.

The instructions are further configured to cause the one or more processors to select the first feature extraction model and the second feature extraction model from among the three or more default feature extraction models based on the target time instant.

The instructions may be further configured to cause the one or more processors to select the first feature extraction model and the second feature extraction model from among the three or more default feature extraction models based on a comparison between the target time instant and reference time instants respectively corresponding to the three or more default feature extraction models.

The first feature extraction model may correspond to a first reference time instant and the second feature extraction model may correspond to a second reference time instant, and wherein the first and second feature extraction models may be selected based on their reference time instants being temporally closest to the target time instant, among reference time instants respectively corresponding to the three or more default feature extraction models.

The instructions may be further configured to cause the one or more processors may select the first feature extraction model and the second feature extraction model from among five default feature extraction models, and select two additional feature extraction models among twenty additional feature extraction models.

The first feature extraction model and the second feature extraction model may be machine learning models each including either a neural network or grid-based representation.

The instructions may be further configured to cause the one or more processors to generate a plurality of pieces of scene information on points along a view direction from a viewpoint, and, based on the pieces of the generated scene information, determine a pixel value of a pixel position corresponding to the view direction in a two-dimensional (2D) scene of a 3D space at the target time instant observed from a view position.

The instructions may be further configured to cause the one or more processor to generate a 2D image corresponding to the 2D scene by determining pixel values of all pixels included in the 2D scene.

In another general aspect, a processor-implemented method is provided according to claim 12. The method includes, from point information and time information, extracting, by a first feature extraction model, first feature data for a target point indicated by the point information in a 3D space at a target time instant corresponding to the time information, from the point information and the time information, extracting, by a second feature extraction model, second feature data for the target point in the 3D space at the target time instant, obtaining spacetime feature data based on the first feature data and the second feature data, and generating, a scene information estimation model, scene information on the target point at the target time instant from the spacetime feature data and a view direction.

Other features and aspects will be apparent from the following detailed description, the drawings, and the claims.

According to further aspects of the invention, there are provided an electronic device, a processor-implemented method, and a non-transitory computer-readable storage medium.

### BRIEF DESCRIPTION OF THE DRAWINGS

FIG. 1 illustrates an example scene reconstruction method.
FIG. 2 illustrates an example scene reconstruction model.
FIG. 3 illustrates an example feature extraction model and scene information estimation model.
FIG. 4 illustrates an example of determining feature interpolation data.
FIG. 5 illustrates an example of generating feature interpolation data according to an additional level of detail (LOD).
FIG. 6 illustrates an example of training a feature extraction network group.
FIG. 7 illustrates another example of the feature extraction model.
FIGS. 8 and 9 illustrate an example configuration of a scene reconstruction device.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

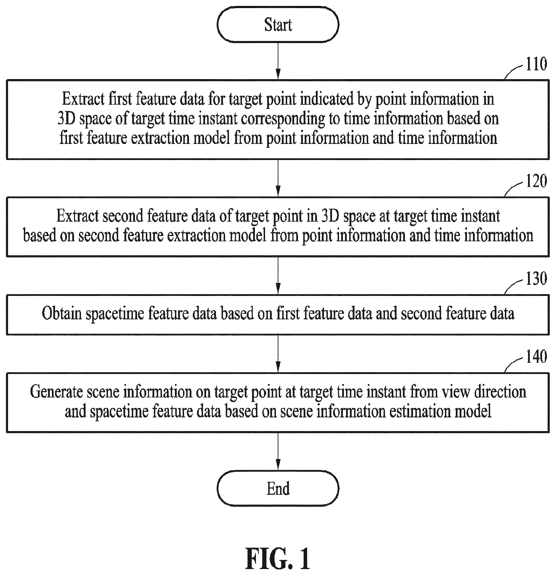

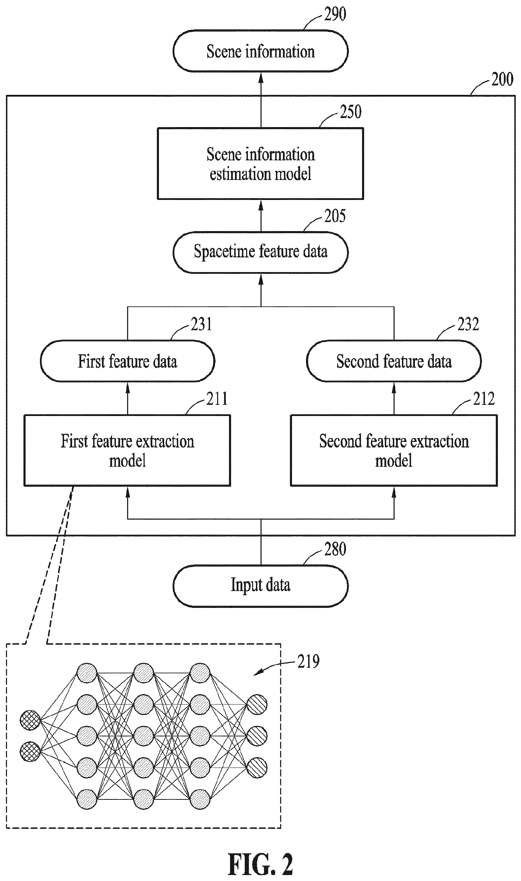

FIG. 1 illustrates an example scene reconstruction method. FIG. 2 illustrates an example scene reconstruction model.

An electronic device (e.g., a scene reconstruction device) according to an example may generate and/or reconstruct a two-dimensional (2D) image of a scene (e.g., a 2D scene) of a three-dimensional (3D) space at a target time instant seen at an arbitrary field of view (FOV, e.g., projection) from an arbitrary viewpoint. The viewpoint may be, for example, a position where a camera (e.g., a virtual camera) having an arbitrary FOV "captures" a scene corresponding into a 2D image. Values of pixels in the 2D image may be determined based on scene information of points along view directions from the viewpoint. A view direction corresponding to an arbitrary pixel in the 2D image may be a direction from the viewpoint to a point in the 3D space corresponding to the arbitrary pixel.

Scene information 290 is data representing a scene component of a target point in a 3D space at a target time instant seen in a view direction, and includes, for example, neural scene representation (NSR) data. The NSR data may include, for example, neural radiance field (NeRF) data. The NSR data may include color information and volume density information of the 3D space for each point and for each view direction. The color information may include color values according to a color space (e.g., a red value, a green value, and a blue value according to an RGB color space). A volume density σ of a predetermined point may be interpreted as a possibility (e.g., differential probability) that a ray ends at an infinitesimal particle of the corresponding point. As will be described later, the color value (e.g., RGB value) of the target point may depend on the view direction, and the volume density may be independent of the view direction. However, the NSR data is not limited to the above description, and may vary according to the design.

According to an example, a scene reconstruction model 200 may include feature extraction models 211 and 212 and a scene information estimation model 250. The scene information 290 corresponding to each point may be generated based on the scene reconstruction model 200. The estimation of the scene information 290 using the feature extraction models 211 and 212 and the scene information estimation model 250 is described below. For reference, the electronic device may use point information about the target point and time information (indicating the time instant of the 3D space) as input data 280 for the first feature extraction model 211 and the second feature extraction model 212 of the scene reconstruction model 200.

First, in operation 110, the electronic device may extract first feature data 231 for the target point at the target time instant based on the first feature extraction model 211 from the point information and the time information. The target point may represent a point in a 3D space indicated by the point information. The point information may include a position (e.g., spatial information) of a target point in a 3D space. The target time instant may represent a time instant corresponding to the time information. The time information may be information (e.g., temporal information) indicating a time instant at which the 3D space, that changes over time, is desired to be reconstructed and/or captured. The first feature extraction model 211 is configured and trained to extract the first feature data 231 corresponding to the target time instant and the target point based on a first reference time instant, and may include, for example, a neural network 219. The first feature data 231 is data in which the target time instant and the target point are abstracted based on the first reference time instant and may include, for example, a feature vector.

In operation 120, the electronic device may extract second feature data 232 of the target point in the 3D space at the target time instant based on the second feature extraction model 212 from the point information and the time information. In a similar manner to the first feature extraction model 211 described above, the second feature extraction model 212 is configured and trained to extract the second feature data 232 corresponding to the target time instant and the target point based on a second reference time instant, and may include, for example, a neural network. The neural network of the second feature extraction model 212 may have parameters different from parameters (e.g., a connection weight) of other models (e.g., the first feature extraction model 211). The second feature data 232 is also data in which the target time instant and the target point are abstracted based on the second reference time instant and may also include, for example, a feature vector.

In this example, the neural networks (e.g., the neural network 219) may include layers, and each layer may include nodes. The node may have a node value determined based on an activation function. A node of an arbitrary layer may be connected to a node (e.g., another node) of another layer through a link (e.g., a connection edge) having a connection weight. The node value of the node may be propagated to other nodes via links. For example, in an inference operation of the neural network, node values may be forward-propagated from a previous layer to a next layer. A node value of a node may be propagated (e.g., forward propagation) to a node (e.g., a next node) of a next layer connected to the corresponding node through a connection edge. For example, the node may receive a value weighted by a connection weight from a previous node (e.g., a plurality of nodes) connected through a connection edge. The node value of the node may be determined based on a sum (e.g., a weighted sum) of weighted values received from the previous nodes, to which an activation function is applied. Parameters of the neural networks may include, for example, the connection weight described above. The parameters of the neural networks may be updated such that an objective function value which will be described later changes in a targeted direction (e.g., a direction in which loss is minimized). The objective function will be described later.

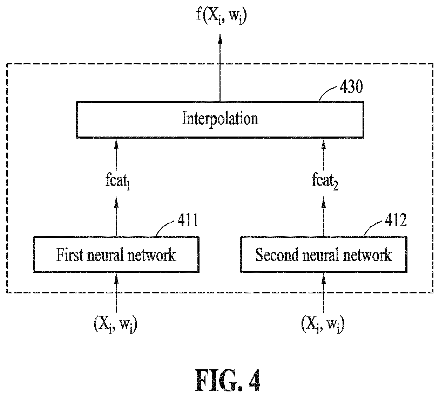

The first reference time instant and the second reference time instant may represent different time instants. When the 3D space is defined for a time period, the time period may be divided into N time frames and may be represented as time between a first time instant (e.g., t₀) to a last time instant (e.g., t_{N-1}). Here, N denotes an integer greater than or equal to 2. For example, the target time instant may indicate an i-th time frame (e.g., tᵢ) as a time instant between the first time instant (e.g., t₀) to the last time instant (e.g., t_{N-1}). As described with reference to FIG. 4, in this example, a value tᵢ indicating the i-th time frame is a ratio of an i-th time instant with respect to the entire time period or a ratio of the i-th time frame with respect to a total number of frames, and may be 0 or more and 1 or less. The value t₀ indicating the first time instant may be 0, and the value t_{N-1} indicating the last time instant may be 1.

The points in the 3D space may change (e.g., move) during the defined time period. For example, the first reference time instant may represent the initial time instant (e.g., t₀) of the 3D space and the second reference time instant may represent the last time instant (e.g., t_{N-1}) of the 3D space. As will be described later, pieces of feature data of the first feature extraction model 211 and the second feature extraction model 212 may be summed up based on weights determined according to comparison between the reference time instants and the target time instant. The feature extraction models 211 and 212 (e.g., the first feature extraction model 211 and the second feature extraction model 212) may be trained by an objective function value based on a weighted sum result. Accordingly, each feature extraction model may output feature data in which a temporal relationship of the target time instant with respect to the reference time instant and the target point are abstracted.

In operation 130, the electronic device may obtain spacetime feature data 205 based on the first feature data 231 and the second feature data 232. The spacetime feature data 205 is feature data in which the target time instant and the target point are abstracted and may be, for example, a feature vector. The electronic device may obtain the spacetime feature data 205 based on an interpolation result of the first feature data 231 and the second feature data 232. The interpolation between pieces of the feature data will be described later with reference to FIG. 4.

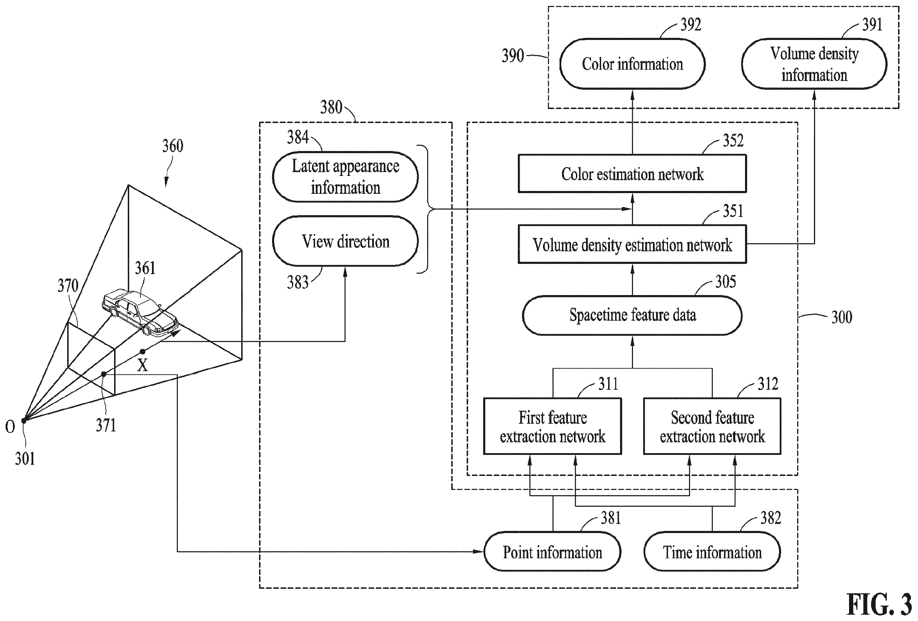

In operation 140, the electronic device may generate the scene information 290 on the target point at the target time instant from the spacetime feature data 205 and the view direction based on the scene information estimation model 250. The electronic device may determine color information (e.g., a color value) and a volume density of the corresponding point as the scene information 290. The scene information estimation model 250 is configured and trained to output the scene information 290 (e.g., the NSR data) from the spacetime feature data 205 and the view direction, and may include, for example, a neural network. The neural network of the scene information estimation model 250 may have parameters (e.g., the connection weights) different from those of the neural networks of the feature extraction models 211 and 212. As described above, since the spacetime feature data 205 is feature data in which the target time instant and the target point are abstracted, the scene information estimation model 250 may output the scene information 290 corresponding to the target time instant and the target point in response to the input of the spacetime feature data 205 and the view direction. As described with reference to FIG. 3, the electronic device may estimate volume density information and embedding data for the target point based on a portion (e.g., a volume density estimation network) of the scene information estimation model 250 from the point information and the time information described above. The electronic device may estimate color information of the target point according to the view direction based on the other portion (e.g., a color estimation network) of the scene information estimation model 250 from the embedding data and the view direction. As described later, the volume density information and the color information are used to determine a pixel value (e.g., a color value of a pixel) of a 2D scene image, and accordingly, the trained scene information estimation model 250 may be understood as learning scenes of the 3D space for each time seen in various view directions.

According to an example, the electronic device may generate a 2D image based on the pieces of scene information obtained in operations 110 to 140 described above. For example, the electronic device may generate pieces of scene information on points along a view direction from a view point. The electronic device may determine a pixel value of a pixel position corresponding to the view direction in the 2D scene based on the generated pieces of scene information. The 2D scene may be a scene of the 3D space at the target time instant seen from a view position. The electronic device may perform volume rendering on the pieces of scene information obtained along the view direction, thereby determining a pixel value corresponding to the corresponding view direction.

For example, view directions may be defined for each pixel of a 2D image (e.g., a scene image). The electronic device may define directions from a predetermined view point toward each pixel of the 2D image as the view directions. The electronic device may determine the view directions corresponding to each respective pixel of the 2D image. The electronic device may sample points (e.g., sample points) along a view direction in a 3D space. The electronic device may calculate output values (e.g., the NSR data as the scene information 290) for all sample points in the view direction through a neural network operation based on the scene reconstruction model 200 (e.g., the first feature extraction model 211, the second feature extraction model 212, and the scene information estimation model 250). For reference, in the method shown in FIG. 1, the calculation of the scene information 290 for a predetermined point (e.g., the target point) among the sample points has been described. The electronic device may generate the point information indicating a position of each target point in the view direction in the 3D space.

The electronic device may perform volume rendering by using the pieces of scene information calculated for the same pixel of the 2D scene image. The volume rendering may include an operation of accumulating color information and volume densities according to a view direction. The electronic device may determine pixel information on a pixel (e.g., a color value of a pixel) corresponding to the view direction by accumulating the color information and volume densities calculated for the points along the view direction.

The electronic device may generate a 2D image by repeating the determination of the pixel information described above. For example, the electronic device may generate a 2D image corresponding to the 2D scene by determining pixel values of all pixels included in the 2D scene image. For example, the electronic device may determine pixel values of pixels (e.g., color values of pixels) included in the 2D image by performing volume rendering for each pixel of the 2D image. The electronic device may generate the 2D image by obtaining the pixel values for all pixels of the 2D image.

According to an example, a NeRF framework targeting 3D rendering of a static object may be extended to a dynamic scene. The dynamic scene may be a scene in which points in the 3D space change over time. Regarding the NeRF framework for representing the dynamic scene, in a first comparative example, a time value (e.g., t) may be simply added as an input to coordinates (e.g., (x,y,z)) indicating a point in the 3D space at time t to be used in the training of the neural network. In a second comparative example, a 3D scene flow moving from a previous frame to a subsequent frame may be estimated. In the second comparative example, the movement of each of 3D coordinates for each frame may be estimated. In a third comparative example, a canonical frame may be constructed and each frame image may be mapped to the canonical frame. In the first comparative example, the scene reconstruction performance is poor, and in the second and third comparative examples, it is necessary to estimate additional learning parameters and inaccurate scene reconstruction may occur since it is difficult to cover changes of all 3D points and all frames in a given time period. In the comparative examples, end-to-end learning is performed by setting a 3D point as an input and comparing a rendered image and a learning data image, however, accuracy of an intermediate process (e.g., learning of the scene flow or canonical shape) may not be guaranteed.

The electronic device according to an example may exhibit excellent 3D neural rendering performance in reconstruction of the dynamic scene (compared to that in the comparative examples described in the Background) through the scene reconstruction model 200 trained with a simple network structure.

FIG. 3 illustrates an example of a feature extraction model and a scene information estimation model.

The electronic device according to an example may estimate scene information 390 from input data 380 based on a scene reconstruction model 300.

The input data 380 may include point information 381, time information 382, a view direction 383, and latent appearance information 384. The input data 380 may also be referred to as a query input. The view direction 383 may be a direction passing through points corresponding to the target pixel from a viewpoint from which a 2D scene 370 to be synthesized and/or reconstructed is viewed. The 2D scene 370 is a scene (or projection) of the 3D space 360 at the target time instant captured for an FOV from a viewpoint 301. A point 371 of the 2D scene 370 may correspond to a pixel of the 2D image. In the example shown in FIG. 3, the point information 381 may include coordinates (x, y, z) indicating a target point X in the 3D space 360, and the view direction 383 may include direction information (*θ*, *ϕ*) indicating a direction from the viewpoint 301 toward the target point X. Coordinates (x, y, z) are based on an arbitrary origin point according to a Cartesian coordinate system, and (*θ*, *ϕ*) are angles formed between each of two arbitrary reference axes (e.g., a positive direction of a z axis and a positive direction of an x axis) and the view direction 383.

According to an example, the electronic device may extract first feature data from the point information 381 and the time information 382 based on a first feature extraction model. The first feature extraction model may be a model designed and trained to extract a feature of a point in the 3D space 360 at a first reference time instant. The first feature extraction model (which may include a neural network) may also be referred to as a first feature extraction network 311. The electronic device may extract second feature data from point information 381 and time information 382 based on the second feature extraction model. The second feature extraction model may be configured and trained to extract a feature of a point in the 3D space 360 at a second reference time instant that is different from the first reference time instant. The second feature extraction model (which may also include a neural network) may also be referred to as a second feature extraction network 312. Two or more feature extraction networks may be independent of each other, e.g., independently trained, have different weights, etc. (although they may have similarly configured input and output layers).

The electronic device may perform interpolation on the first feature data and the second feature data to obtain spacetime feature data 305. The interpolation of the first feature data and the second feature data may be based on the first reference time instant, the second reference time instant, and the target time instant. The spacetime feature data 305 may be generated by merging based on linear interpolation of pieces of feature data. Weights applied to each feature data for the interpolation may vary depending on a query frame (e.g., a time frame indicated by the time information 382). The determination of the spacetime feature data 305 based on the interpolation is described with reference to FIG. 4.

According to an example, the electronic device may generate the scene information 390 from the spacetime feature data 305 and the view direction 383 based on the scene information estimation model. The scene information estimation model may include, for example, a volume density estimation network 351 and a color estimation network 352. The volume density estimation network 351 and the color estimation network 352 may each be implemented as a multi-layer perceptron (MLP) network including a neural network.

The electronic device may generate an embedding vector (or a latent vector) and volume density information 391 from the spacetime feature data 305 based on the volume density estimation network 351. As described above, the volume density information 391 may include a volume density value at a corresponding target point.

The electronic device may estimate color information 392 based on the color estimation network 352 from additional inputs along with the embedding vector. The additional inputs may include, for example, the view direction 383 and the latent appearance information 384. The view direction 383 has been described above. As described above, the color information 392 may include a color value where the target point is viewed in the view direction 383. For reference, in a case of estimating the color information 392, the electronic device may additionally input the latent appearance information 384 (e.g., a latent appearance code) to the scene information estimation model (e.g., the color estimation network 352). The latent appearance information 384 may indicate an environment (e.g., camera setting, a camera model, or lighting at a specific time instant) that may potentially affect the color of an individual point.

For reference, in this example, X (or Xᵢ) represents coordinates of a 3D point sampled along the view direction 383 in the 3D space 360 of an i-th time frame (e.g., tᵢ). ***θ*** and 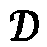 represent the view direction 383. The variable wᵢ is the time information 382 and may be, for example, a vector indicating the i-th time frame (e.g., tᵢ). The time information 382 may be, for example, a deformation code. ***ψ**ᵢ* is the latent appearance information 384 and may include a latent appearance code for color calibration of a scene (e.g., a scene corresponding to the i-th time frame or a scene captured by another camera). Variable σ represents a volume density calculated for a correction input and c represents an RGB color value calculated for a corresponding input.

For reference, the deformation code and the latent appearance code may be determined through training of the scene reconstruction model 300. For example, a training device (e.g., the electronic device) may calculate an objective function value based on the output obtained by performing the forward propagation of the i-th time frame (e.g., tᵢ) and the target point to the scene reconstruction model 300. The training device may output the temporary scene information 390 (e.g., the color information 392 and the volume density information 391) based on the forward propagation of the scene reconstruction model 300, and a temporary pixel value corresponding to the 2D scene image may be obtained from the temporary scene information 390 by volume rendering. The objective function (e.g., rendering loss) may be determined, for example, based on a difference (e.g., L2 loss) between a pixel value of a ground truth (GT) color image and a temporary pixel value based on the forward propagation described above. However, the objective function value is not limited thereto and may vary depending on the design. The training device may update parameters (e.g., the connection weights) of the scene reconstruction model 300 (e.g., the color estimation network 352, the volume density estimation network 351, the first feature extraction network 311, and the second feature extraction network 312) based on the back propagation so that the objective function value changes in a certain direction (e.g., a decreasing direction). At this time, the training device may update the time information 382 (e.g., the deformation code) as well as the parameters of the neural network.

When the training is completed, the time information 382 indicating each time frame may be determined. Unique deformation codes may be individually mapped for each time frame. Similarly, the training device may calculate the objective function value based on the output obtained by performing the forward propagation of the i-th time frame (e.g., tᵢ), the target point, the view direction, and the latent appearance code to the scene reconstruction model 300. The latent appearance information 384 (e.g., the latent appearance code) may also be determined by an update through the training. The unique latent appearance codes may be individually mapped for each environment. According to an example, in an inference operation for scene information using the scene reconstruction model 300, the electronic device may receive the deformation code and the latent appearance code and input these to the scene reconstruction model 300.

FIG. 4 illustrates an example of determining feature interpolation data.

The electronic device according to an example may extract pieces of feature data through a feature extraction network group and determine interpolated feature data based on the extracted feature data. The electronic device may include a number of feature extraction network groups corresponding to a number (e.g., L) of levels of detail (LOD). The feature extraction network group corresponding to a given LOD may include multiple feature extraction networks (e.g., neural networks such as nₖ feature extraction networks), where nₖ denotes the number of feature extraction networks included in a feature extraction network group corresponding to a k-th LOD, and k is between 1 and L, inclusively.

FIG. 4 shows an example in which the number of LODs L is 1 (which may be a default) and the number n₁ of feature extraction networks included in the one feature extraction network group is 2. The electronic device may perform the forward propagation of a 3D point Xᵢ and a latent variable wᵢ indicating a time frame to the feature extraction network group for each LOD as input data. In the example shown in FIG. 4, the feature extraction network group corresponding to the default/1 LOD may include a first neural network 411 and a second neural network 412. The first neural network 411 may output first feature data feat, and the second neural network 412 may output second feature data feat₂. The electronic device may calculate feature interpolation data (e.g., f(Xᵢ, wᵢ)) by applying linear interpolation 430 to outputs of the feature extraction network group. For example, the linear interpolation 430 may be performed by Equation 1 shown below. $f \left({X}_{i}, {w}_{i}\right) = \left(1-{t}_{i}\right) \times {feat}_{1} + {t}_{i} \times {feat}_{2}$ Equation 1

In Equation 1, *tᵢ* is a value indicating a time frame (e.g., the i-th time frame) of a target time instant. When a total number of frames in a dynamic 3D space (e.g., a video of a 3D space), which is a learning target of the scene reconstruction model, is N, a value indicating the i-th time frame may be defined as ${t}_{i} = \frac{i}{N - 1}$. Here, N is greater than or equal to 2 and i is greater than or equal to 0 and less than or equal to N-1. As described above in Equation 1, a weight formed of a value indicating the time frame may be applied to each feature data.

For example, the electronic device may apply a first weight determined based on the first reference time instant (e.g., t_{ref,1} = 0) and the target time instant (e.g., tᵢ) to the second feature data. The electronic device may determine the first weight based on a time difference between the first reference time instant and the target time instant (e.g., tᵢ - t_{ref,1}). The electronic device may apply a second weight determined based on the second reference time instant (e.g., t_{ref,2} = 1) and the target time instant to the first feature data. The electronic device may determine the second weight based on a time difference between the second reference time instant and the target time instant (e.g., t_{ref,2} - tᵢ). The sum of the first weight and the second weight may be, for example, 1. As may be seen, such time-based interpolation can permit smooth interpolation-based scene reconstruction along arbitrary time frames in a time period.

As the target time instant (e.g., tᵢ) is further away from the second reference time instant and approaches closer to the first reference time instant, a larger weight may be multiplied by the first feature data output from the first neural network 411. As the target time instant is further away from the first reference time instant and approaches closer to the second reference time instant, a larger weight may be multiplied by the second feature data output from the second neural network 412. The electronic device may sum (i) a vector obtained by multiplying the second weight by the first feature data and (ii) a vector obtained by multiplying the first weight by the second feature data as feature interpolation data (e.g., f(Xᵢ, wᵢ)), and thus obtain a vector of feature interpolation data. The training may be performed using an objective function value determined according to the forward propagation of the feature interpolation data (e.g., f(Xᵢ, wᵢ)) described above. Accordingly, the first neural network 411 may be trained to output the first feature data in which the target time instant and the target point are abstracted based on the first reference time instant (e.g., t_{ref,1} = 0). The second neural network 412 may be trained to output the second feature data (in which the target time instant and the target point are abstracted) based on the second reference time instant (e.g., t_{ref,2} = 1).

For example, when the target time instant is the first reference time instant, the electronic device may use the first feature data output from the first neural network 411 as the spacetime feature data. When the target time instant is the second reference time instant, the electronic device may use, as the spacetime feature data, the second feature data output from the second neural network 412. When the target time instant is between the first reference time instant and the second reference time instant, the electronic device may use, as the spacetime feature data, the feature interpolation data (e.g., f(Xᵢ, wᵢ)) obtained by the linear interpolation per Equation 1 between pieces of feature data output from the two neural networks.

However, the determination/use of the feature interpolation data (e.g., f(Xᵢ, wᵢ)) is not limited to the above description. When the feature extraction network group includes three or more feature extraction networks, the electronic device selects, from among them, two feature extraction networks, and the selection is based on the target time instant. For example, the electronic device selects the first feature extraction model and the second feature extraction model from three or more default feature extraction models. The default feature extraction models may belong to a feature extraction network group of a default LOD (e.g., a first LOD). As noted, the first feature extraction model and the second feature extraction model is selected from among the three or more default feature extraction models based on the target time instant. For example, the electronic device selects the first feature extraction model and the second feature extraction model based on a comparison between reference time instants respectively corresponding to the three or more default feature extraction models and the target time instant. The electronic device may select the first feature extraction model based on it corresponding to the first reference time instant and select the second feature extraction model based on it corresponding to the second reference time instant; the first and second time instants being temporally adjacent to the target time instant, among the reference time instants respectively corresponding to the three or more default feature extraction models. The target time instant may be included in a time range defined by the first reference time instant and the second reference time instant. The first reference time instant and the second reference time instant may be top two time instants which are temporally closest to the target time instant among the reference time instants. The first reference time instant may be a time instant most adjacent to the target time instant among reference time instants preceding the target time instant, and the second reference time instant may be a time instant most adjacent to the target time instant among reference time instants subsequent to the target time instant.

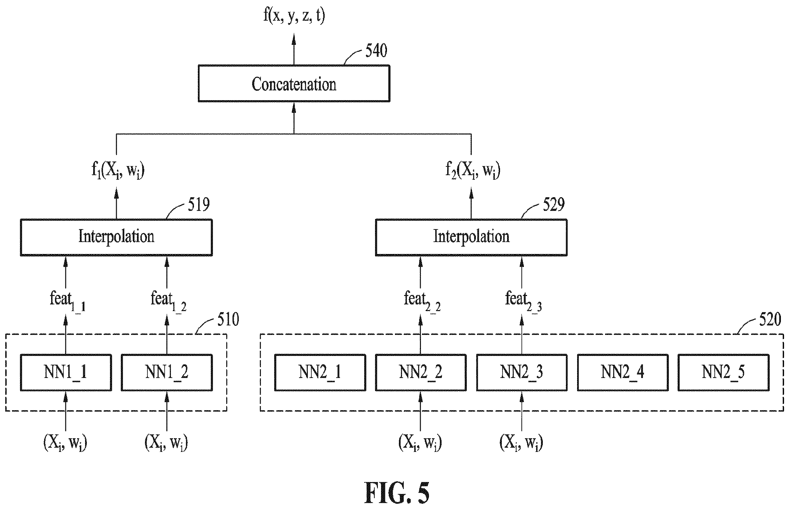

For convenience of description, the default LOD has been mainly described with reference to FIG. 4. Selection of feature extraction networks for multiple respective LODs and determination of feature interpolation data using the selected feature extraction networks is described with reference to FIG. 5.

FIG. 5 illustrates an example of generating feature interpolation data according to an additional LOD (or, multiple LODs).

According to an example, the electronic device may include feature extraction network groups for respective LODs. Association information may be stored and accessed. The association information may indicate which LODs are associated with which network groups and may be used to select a network group for a given LOD. Each feature extraction network group may include a plurality of feature extraction networks. For example, a feature extraction network group for a k-th LOD among L LODs may include nₖ feature extraction models (e.g., feature extraction networks). A reference time instant may be assigned to each feature extraction model of each group. For example, a j-th reference time instant may be assigned to a j-th feature extraction model among the nₖ feature extraction models of a given group. The j-th reference time instant (e.g., t_{ref,j}) is a j-th time instant of time instants obtained by equally dividing a time period (e.g., 0 or more and 1 or less) by (nₖ - 1), and may be represented as t_{ref,j} = (j - 1)(t_{N-1} - t₀)/(nₖ - 1) = (j - 1)/(nₖ - 1). Here, j denotes an integer greater than or equal to 1 and less than or equal to nₖ. Interpolation data may be generated by Equation 2 for the case in which the number nₖ of feature extraction models is 2 (described above with reference to FIG. 4) as well as for a case where the feature extraction network group includes 3 or more feature extraction models. $f \left({X}_{i}, {w}_{i}\right) = \left(\frac{{t}_{ref , j + 1} - {t}_{i}}{{t}_{ref , j + 1} - {t}_{ref , j}}\right) \times {feat}_{j} + \left(\frac{{t}_{i} - {t}_{ref , j}}{{t}_{ref , j + 1} - {t}_{ref , j}}\right) \times {feat}_{j + 1}$ Equation 2

In Equation 2, j denotes an integer greater than or equal to 1 and less than or equal to nₖ-1. The electronic device may obtain a weight based on a difference (e.g., tᵢ - t_{ref,j}) between the target time instant and the j-th reference time instant (e.g., the first reference time instant). The weight may be applied to (j+1)-th feature data (e.g., featⱼ₊₁) output from a (j+1)-th feature extraction model. The A weight obtained based on a difference (e.g., t_{ref,j+1} - tᵢ) between the target time instant and a (j+1)-th reference time instant (e.g., the second reference time instant) may be applied to the j-th feature data (e.g., featⱼ) output from the j-th feature extraction model. The electronic device may determine, as the feature interpolation data, the sum of applying the weights determined based on (i) the target time instant and the (ii) reference time instants to the pieces of feature data as per Equation 2. The electronic device may generate pieces of feature interpolation data, by Equation 2, for feature extraction network groups corresponding to respective LODs.

For example, the electronic device may generate the pieces of feature interpolation data by using feature extraction network groups respectively corresponding to the default LOD and an additional LOD. FIG. 5 shows an example in which the number L of LODs is 2. There may be 2 feature extraction models included in a default feature extraction network group 510 corresponding to the default LOD (n₁ is 2). There may be 5 feature extraction models included in an additional feature extraction network group 520 corresponding to the additional LOD (n₂ is 5). The numbers of feature extraction models included in the groups are not limited to these examples. The electronic device may determine default feature interpolation data (e.g., f₁(Xᵢ,wᵢ)) corresponding to the default LOD and additional feature interpolation data (e.g., f₂(Xᵢ,wᵢ)) corresponding to the additional LOD.

For example, the electronic device may extract first feature data feat_{1_1} and second feature data feat_{1_2} based on feature extraction networks NN1_1 and NN1_2 included in the default group. The electronic device may generate the default feature interpolation data f₁(Xᵢ,wᵢ) through interpolation 519 described above with reference to FIG. 4 based on the extracted first feature data feats_{1_1} and second feature data feat_{1_2}.

The electronic device may extract pieces of additional feature data respectively corresponding to the target time instant and the target point based on a plurality of feature extraction models NN2_1-NN2_5 of the additional group corresponding to the additional LOD. The electronic device may generate the additional feature interpolation data based on such pieces of extracted additional feature data. For example, the electronic device may select two additional feature extraction models NN2_2 and NN2_3 among the plurality of additional feature extraction models NN2_1, NN2_2, NN2_3, NN2_4, and NN2_5 based on the target time instant (e.g., the feature extraction models temporally closest to the target time instant).

To elaborate, similar to the selection technique described with reference to FIG. 4, the electronic device may select additional feature extraction models based on a comparison between the target time instant and the reference time instant assigned to each additional feature extraction model included in the additional group. The electronic device may select the additional feature extraction models NN2_2 and NN2_3 that have been assigned to the two reference time instants that are most adjacent to the target time instant. The target time instant may be a time instant between the first reference time instant assigned to the first additional feature extraction model NN2_2 and the second reference time instant assigned to the second additional feature extraction model NN2_3. Additional pieces of feature data feat_{2_2} and feat_{2_3} may be extracted by using the two selected additional feature extraction models NN2_2 and NN2_3. The electronic device may generate the additional feature interpolation data f₂(Xᵢ,wᵢ) by applying linear interpolation 529 based on Equation 2 to the additional feature data feat_{2_2} and feat_{2_3}.

The electronic device may determine spacetime feature data (f(x,y,z,t)) based on the feature interpolation data and the additional feature interpolation data that corresponds to the additional LOD. For example, the electronic device may determine the spacetime feature data (f(x,y,z,t)) by concatenating (540) the default feature interpolation data and the additional feature interpolation data.

For reference, FIG. 5 shows an example in which the number of default feature extraction models in the default group is 2 and the number of additional feature extraction models in the additional group is 5, but the example is not limited thereto. It may vary depending on the design. For example, the number of default feature extraction models may be 5 and the number of additional feature extraction models may be 20. The electronic device may select the first feature extraction model and the second feature extraction model from five default feature extraction models. The electronic device may select two additional feature extraction models among 20 additional feature extraction models. According to an example, the number of neural networks may be variously configured for each of the LODs described above. FIG. 5 shows an example in which the number of LODs is 2, but there may be three or more LODs having respective varying numbers of feature extraction networks.

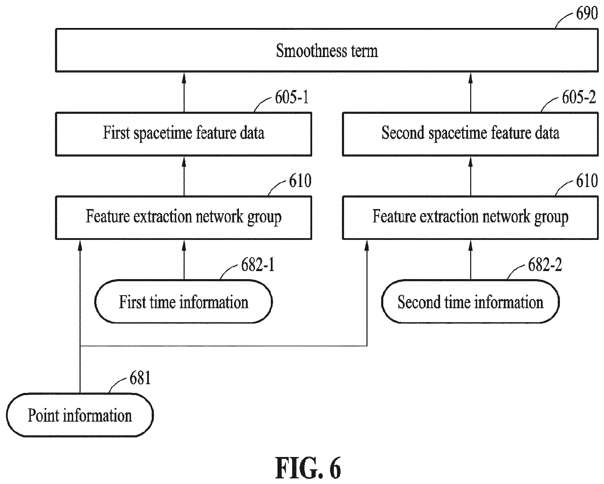

FIG. 6 illustrates an example of training a feature extraction network group.

According to an example, the networks (e.g., the feature extraction networks, volume density estimation network, and color estimation network) of the scene reconstruction model may be trained based on rendering loss. The feature extraction networks may be further trained based on a smoothness term 690 between adjacent time frames, in addition to the training based on rendering loss.

For example, one feature extraction network group 610 may include the feature extraction models 211 and 212 (shown in FIG. 2) and another group may include the feature extraction networks 311 and 312 (shown in FIG. 3). The default group 510 or the additional group 520 may group include the neural networks 411 and 412 (shown in FIG. 4). 5. Pieces of spacetime feature data 605-1 and 605-2 may be generated based on pieces of feature data output from a plurality of feature extraction networks (e.g., two feature extraction networks). For reference, each of the spacetime feature data 605-1 and 605-2 may be feature interpolation data based on linear interpolation of pieces of feature data extracted for a corresponding time frame (e.g., see FIG. 4) and data obtained by concatenating pieces of feature interpolation data obtained for respective LODs (e.g., see FIG. 5).

The training device (e.g., the electronic device) may obtain pieces of spacetime feature data for different time instants by applying the same feature extraction network group 610 to the same point information 681 at different time information 682-1 and 682-2. For example, as shown in FIG. 6, the training device may determine first spacetime feature data 605-1 based on a result of propagating the point information 681 and the first time information 682-1 to the feature extraction network group 610. The training device may determine second spacetime feature data 605-2 based on a result of propagating the point information 681 and the second time information 682-2 to the feature extraction network group 610. The first time information 682-1 and the second time information 682-2 are different time instants, respectively, and may, for example, indicate time instants adjacent to each other. For example, when the first time information 682-1 indicates an i-th time frame, the second time information 682-2 may indicate a (i+1)-th time frame. The first spacetime feature data 605-1 and the second spacetime feature data 605-2 may be abstracted for the same point in adjacent time frames. The training device may calculate the smoothness term 690 by Equation 3 shown below based on the first spacetime feature data 605-1 and the second spacetime feature data 605-2. ${\left‖f\left({X}_{i}, {w}_{i}\right)-f\left({X}_{i}, {w}_{i + 1}\right)\right‖}^{2}$ Equation 3

Equation 3 is the smoothness term 690 for the pieces of spacetime feature data which may represent L2 norm between the first spacetime feature data 605-1 and the second spacetime feature data 605-2. The term f(Xᵢ,wᵢ) represents the first spacetime feature data 605-1 extracted for the i-th frame and the term f(Xᵢ,wᵢ₊₁) represents the second spacetime feature data 605-2 extracted for the (i+1)-th frame. The training device may perform the training on the feature extraction network group 610 based on an objective function value that includes the smoothness term 690 based on Equation 3. Parameters (e.g., connection weights) of the entire feature extraction network group 610 may be updated through back-propagation of the smoothness term 690 so that the features become similar at a same 3D point between adjacent time frames. Through the corresponding smoothness term 690, the training device may effectively train the feature extraction network group 610 even for a 3D point that is not observed in a specific frame.

However, the smoothness term 690 is not limited thereto. The training device may apply the smoothness term 690 to feature data of matched points using an optical flow at different time instants. In another example, the training device may find patches similar to each other among images rendered for different time instants and apply the smoothness term 690 between the patches.

According to an example, the smoothness is applied to the feature extracted from the feature extraction network group 610 rather than a final result obtained by the smoothness term 690 described above. Accordingly, the features for properties not included in an actual output attribute may also become similar. It may be used along with the interpolation described above with reference to FIGS. 1 to 5, which may enable more efficient training.

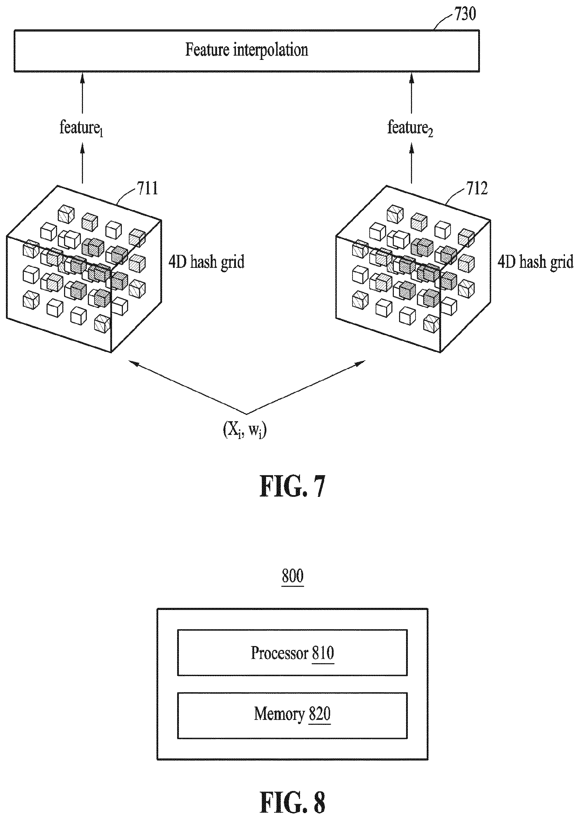

FIG. 7 illustrates another example of the feature extraction model.

According to an example, the model for extracting the spacetime feature data (e.g., the first feature extraction model 711 and the second feature extraction model 712) may be a machine learning model including a neural network and grid-based representation. The example in which the feature extraction models include a neural network has been mainly described with reference to FIGS. 1 to 6. The example is not limited thereto, and the feature extraction model may be implemented as the grid-based representation.

For example, as shown in FIG. 7, the first feature extraction model 711 and the second feature extraction model 712 may be implemented as a grid-based representation model. The grid-based representation model may be trained faster than the neural network. The grid-based representation model is a four-dimensional tensor grid and may include a feature vector for several time frames for each voxel in a 3D space. When the time frame is designated by the time information, the electronic device may retrieve and output a feature vector corresponding to a voxel indicated by the point information from the grid-based representation model. The feature vector corresponding to the voxel may be efficiently stored in a memory and referred to (referenced) based on a hash function. The electronic device may obtain feature interpolation data based on feature interpolation 730 between first feature data feature, and second feature data feature₂ of the first feature extraction model 711. The electronic device may obtain pieces of feature interpolation data by extracting only the feature vector of voxels corresponding to sample points along a view direction corresponding to a pixel among voxels of the grid-based representation model. The electronic device may estimate pieces of scene information from the spacetime feature data and the view direction based on the feature interpolation data based on the scene information estimation model, and perform volume rendering by using the estimated scene information.

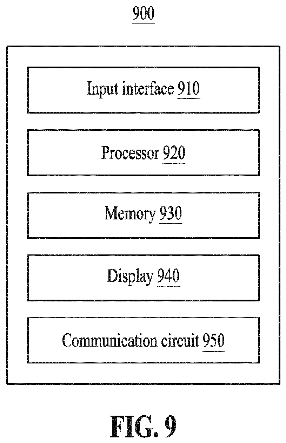

FIGS. 8 and 9 illustrate an example configuration of a scene reconstruction device.

An electronic device 800 according to an example is a device for reconstructing an image (e.g., a video) of a dynamic scene for a 3D space and may include a processor 810 and a memory 820.

The processor 810 may extract, from point information and time information, first feature data for a target point indicated by the point information in a 3D space at a target time instant corresponding to the time information based on the first feature extraction model. The processor 810 may extract second feature data of the target point in the 3D space at the target time instant based on the second feature extraction model from the point information and the time information. The processor 810 may obtain spacetime feature data based on the first feature data and the second feature data. The spacetime feature data may be determined by linear interpolation of the first feature data and the second feature data on a time axis. The processor 810 may generate scene information on the target point at the target time instant from the spacetime feature data based on the scene information estimation model. However, the operation of the processor 810 is not limited thereto, and the processor 810 may perform at least one of the operations described with reference to FIGS. 1 to 7 in parallel or in a time series.

The memory 820 may store a first feature extraction model, a second feature extraction model, and a scene information estimation model. The memory 820 may further include additional feature extraction models for additional LODs along with the first feature extraction model and the second feature extraction model for the default LOD. The scene information estimation model may include a volume density estimation model and a color estimation model. The first feature extraction model and the second feature extraction model may be configured to independently extract features.

Referring to FIG. 9, an electronic device 900 (e.g., a computing device) may include an input interface 910, a processor 920, a memory 930, a display 940, and a communication circuit 950. The electronic device 900 is a device that performs training of the scene reconstruction model and/or inference (e.g., scene reconstruction) using the scene reconstruction model described above with reference to FIGS. 1 to 8. The electronic device 900 may be, or may be included in, for example, an image processing device, a smart phone, a wearable device, a tablet computer, a netbook, a laptop, a desktop, or a personal digital assistant (PDA).

The input interface 910, the processor 920, the memory 930, the display 940, and the communication circuit 950 may communicate with one another though a communication bus.

The input interface 910 may receive an input from a user through a tactile, video, audio, or touch input. The input interface 910 may include, for example, a keyboard, a mouse, a touchscreen, a microphone, and other devices that may detect an input from a user and transmit the detected input.

The processor 920 executes functions and instructions in the electronic device 900 (e.g., the computing device). For example, the processor 920 may process instructions stored in the memory 930. The processor 920 may perform one or more operations described above with reference to FIGS. 1 through 8.

The memory 930 stores information or data necessary for the execution of the processor 920. For example, the memory 930 may include the above-described machine learning models. The memory 930 may include a non-transitory computer-readable storage medium or a non-transitory computer-readable storage device. The memory 930 may store instructions to be executed by the processor 920 and may store related information while software and/or an application is executed by the electronic device 900.

The display 940 may visually provide an output of the electronic device 900 to a user. For example, the display 940 may display a 2D scene image reconstructed by the processor 920.

The communication circuit 950 may communicate with an external device through a wired or wireless network. The communication circuit 950 may receive the machine learning models and the parameters (e.g., trained parameters) of each machine learning model described above from an external device (e.g., a server).

The electronic device 800 or 900 according to an example may perform 2D scene representation using neural rendering (e.g., NeRF) of a 3D dynamic or deformable scene. The electronic device 800 or 900 may perform training of the scene representation according to 3D space and time by extending the NeRF by a dynamic object and a scene. The electronic device 800 or 900 may generate a corresponding 2D scene image when a user arbitrarily inputs a time and a view. The electronic device 800 or 900 may select some feature extraction networks (e.g., two feature extraction networks) according to the time information input by the user among a plurality of independent feature extraction networks, and determine spacetime feature data by linearly interpolating pieces of feature data extracted by using the selected feature extraction networks. The electronic device 800 or 900 may estimate NSR data based on a scene information estimation model using the spacetime feature data. The electronic device 800 or 900 may be widely applied to all tasks related to computer graphics. In particular, even a 3D scene at a time instant that was not filmed as a video may be reconstructed. The electronic device 800 or 900 may be used for video interpolation, video stabilization, and the like. The electronic device 800 or 900 may perform 3D virtual world reconstruction and new video rendering and encoding.

The computing apparatuses, the electronic devices, the processors, the memories, the displays, the information output system and hardware, the storage devices, and other apparatuses, devices, units, modules, and components described herein with respect to FIGS. 1-9 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-9 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims, and all variations within the scope of the claims are to be construed as being included in the disclosure.

## Claims

1. An electronic device comprising:
one or more processors;
a memory storing a first feature extraction model, a second feature extraction model, said first feature extraction model and said second feature extraction model being preferably machine learning models each comprising either a neural network or grid-based representation, a scene information estimation model, and instructions configured to, when executed by the one or more processors, cause the one or more processors to:
from point information and time information, extract, by the first feature extraction model, first feature data for a target point indicated by the point information in a three-dimensional, 3D, space at a target time instant corresponding to the time information;
from the point information and the time information, extract, by the second feature extraction model, second feature data for the target point in the 3D space at the target time instant;
wherein the first feature extraction model and the second feature extraction model are selected from among three or more default feature extraction models based on the target time instant, or based on a comparison between the target time instant and reference time instants respectively corresponding to the three or more default feature extraction models;
obtain spacetime feature data based on the first feature data and the second feature data; and
generate, by the scene information estimation model, scene information on the target point at the target time instant from the spacetime feature data and a view direction.

2. The electronic device of claim 1, wherein the instructions are further configured to cause the one or more processors to:
perform interpolation based on the first feature data and the second feature data; and
obtain the spacetime feature data based on a result of the interpolation.

3. The electronic device of claim 1 or 2,
wherein the first feature extraction model is a model trained for a 3D space at a first reference time instant, and
wherein the second feature extraction model is a model trained for a 3D space at a second reference time instant that is different from the first reference time instant.

4. The electronic device of any one of the previous claims, wherein the instructions are further configured to cause the one or more processors to:
determine the spacetime feature data based on interpolation of the first feature data and the second feature data based on a first reference time instant, a second reference time instant, and the target time instant.

5. The electronic device of claim 4, wherein the instructions are further configured to cause the one or more processors to perform the interpolation by:
applying a first weight determined based on the first reference time instant and the target time instant to the second feature data; and
applying a second weight determined based on the second reference time instant and the target time instant to the first feature data.

6. The electronic device of claim 4 or 5, wherein the instructions are further configured to cause the one or more processors to:
determine a first weight based on a time difference between the first reference time instant and the target time instant; and
determine a second weight based on a time difference between the second reference time instant and the target time instant.

7. The electronic device of any one of the previous claims, wherein the instructions are further configured to cause the one or more processors to:
generate default feature interpolation data based on the first feature data and the second feature data; and
determine the spacetime feature data based on the feature interpolation data and additional feature interpolation data corresponding to an additional level of detail (LOD), preferably by concatenating the default feature interpolation data and the additional feature interpolation data.

8. The electronic device of claim 7, wherein the instructions are further configured to cause the one or more processors to:
extract pieces of additional feature data corresponding to the target time instant and the target point based on a plurality of additional feature extraction models corresponding to the additional LOD; and
generate the additional feature interpolation data based on the pieces of the extracted additional feature data; and
optionally, wherein the instructions are further configured to cause the one or more processors to:
select two additional feature extraction models from among the plurality of additional feature extraction models based on the target time instant; and
extract the pieces of the additional feature data by using the selected two additional feature extraction models.

9. The electronic device of any one of the previous claims, wherein the first feature extraction model corresponds to a first reference time instant and the second feature extraction model corresponds to a second reference time instant, and wherein the first and second feature extraction models are selected based on their reference time instants being temporally closest to the target time instant among reference time instants respectively corresponding to the three or more default feature extraction models.

10. The electronic device of claim 9, wherein the instructions are further configured to cause the one or more processors to:
select the first feature extraction model and the second feature extraction model from among five default feature extraction models based on the target time instant; and
select two additional feature extraction models among twenty additional feature extraction models based on the target time instant.

11. The electronic device of any one of the previous claims, wherein the instructions are further configured to cause the one or more processors to:
generate a plurality of pieces of scene information on points along a view direction from a viewpoint; and
based on the pieces of the generated scene information, determine a pixel value of a pixel position corresponding to the view direction in a two-dimensional, 2D, scene of a 3D space at the target time instant observed from a view position; and
optionally, wherein the instructions are further configured to cause the one or more processors to:
generate a 2D image corresponding to the 2D scene by determining pixel values of all pixels included in the 2D scene.

12. A processor-implemented method, the method comprising:
from point information and time information, extracting, by a first feature extraction model, first feature data for a target point indicated by the point information in a three-dimensional (3D) space at a target time instant corresponding to the time information;
from the point information and the time information, extracting, by a second feature extraction model, second feature data for the target point in the 3D space at the target time instant;
wherein the first feature extraction model and the second feature extraction model are selected from among three or more default feature extraction models based on the target time instant, or based on a comparison between the target time instant and reference time instants respectively corresponding to the three or more default feature extraction models;
obtaining spacetime feature data based on the first feature data and the second feature data; and
generating, by a scene information estimation model, scene information on the target point at the target time instant from the spacetime feature data and a view direction.

13. A non-transitory computer-readable storage medium storing instructions that, when executed by a processor, cause the processor to perform the method of claim 12.

## Patentansprüche

1. Elektronische Vorrichtung, umfassend:
einen oder mehrere Prozessoren;
einen Speicher, der ein erstes Merkmalsextraktionsmodell, ein zweites Merkmalsextraktionsmodell, wobei es sich bei dem ersten Merkmalsextraktionsmodell und dem zweiten Merkmalsextraktionsmodell vorzugsweise um Modelle des maschinellen Lernens handelt, die jeweils entweder ein neuronales Netzwerk oder eine gitterbasierte Darstellung umfassen, ein Szeneninformationsschätzungsmodell und Anweisungen speichert, die so konfiguriert sind, dass sie, wenn sie von dem einen oder den mehreren Prozessoren ausgeführt werden, den einen oder die mehreren Prozessoren veranlassen zum:
Extrahieren, aus Punktinformationen und Zeitinformationen, durch das erste Merkmalsextraktionsmodell, von ersten Merkmalsdaten für einen durch die Punktinformationen angegebenen Zielpunkt in einem dreidimensionalen, 3D, Raum zu einem den Zeitinformationen entsprechenden Zielzeitpunkt;
Extrahieren, aus den Punktinformationen und den Zeitinformationen, durch das zweite Merkmalsextraktionsmodells, von zweiten Merkmalsdaten für den Zielpunkt im 3D-Raum zum Zielzeitpunkt;
wobei das erste Merkmalsextraktionsmodell und das zweite Merkmalsextraktionsmodell aus drei oder mehr Standardmerkmalsextraktionsmodellen auf der Grundlage des Zielzeitpunkts oder auf der Grundlage eines Vergleichs zwischen dem Zielzeitpunkt und Referenzzeitpunkten, die jeweils den drei oder mehr Standardmerkmalsextraktionsmodellen entsprechen, ausgewählt werden;
Erhalten von Raum-Zeit-Merkmalsdaten auf der Grundlage der ersten Merkmalsdaten und der zweiten Merkmalsdaten; und
Erzeugen, durch das Szeneninformationsschätzungsmodell, von Szeneninformationen über den Zielpunkt zum Zielzeitpunkt aus den Raum-Zeit-Merkmalsdaten und einer Blickrichtung.

2. Elektronische Vorrichtung nach Anspruch 1, wobei die Anweisungen ferner so konfiguriert sind, dass sie den einen oder die mehreren Prozessoren veranlassen zum:
Durchführen einer Interpolation auf der Grundlage der ersten Merkmalsdaten und der zweiten Merkmalsdaten; und
Erhalten der Raum-Zeit-Merkmalsdaten auf der Grundlage eines Interpolationsergebnisses.

3. Elektronische Vorrichtung nach Anspruch 1 oder 2,
wobei das erste Merkmalsextraktionsmodell ein Modell ist, das für einen 3D-Raum zu einem ersten Referenzzeitpunkt trainiert wurde, und
wobei das zweite Merkmalsextraktionsmodell ein Modell ist, das für einen 3D-Raum zu einem zweiten Referenzzeitpunkt trainiert wurde, der sich vom ersten Referenzzeitpunkt unterscheidet.

4. Elektronische Vorrichtung nach einem der vorstehenden Ansprüche, wobei die Anweisungen ferner so konfiguriert sind, dass sie den einen oder die mehreren Prozessoren veranlassen zum:
Bestimmen der Raum-Zeit-Merkmalsdaten auf der Grundlage der Interpolation der ersten Merkmalsdaten und der zweiten Merkmalsdaten auf der Grundlage eines ersten Referenzzeitpunkts, eines zweiten Referenzzeitpunkts und des Zielzeitpunkts.

5. Elektronische Vorrichtung nach Anspruch 4, wobei die Anweisungen ferner so konfiguriert sind, dass sie den einen oder die mehreren Prozessoren veranlassen, die Interpolation durchzuführen durch:
Anwenden eines ersten Gewichtungsfaktors, der auf Grundlage des ersten Referenzzeitpunkts und des Zielzeitpunkts bestimmt wird, auf die zweiten Merkmalsdaten; und
Anwenden eines zweiten Gewichtungsfaktors, der auf der Grundlage des zweiten Referenzzeitpunkts und des Zielzeitpunkts bestimmt wird, auf die ersten Merkmalsdaten.

6. Elektronische Vorrichtung nach Anspruch 4 oder 5, wobei die Anweisungen ferner so konfiguriert sind, dass sie den einen oder die mehreren Prozessoren veranlassen zum:
Bestimmen eines ersten Gewichtungsfaktors auf der Grundlage einer Zeitdifferenz zwischen dem ersten Referenzzeitpunkt und dem Zielzeitpunkt; und
Bestimmen eines zweiten Gewichtungsfaktors auf der Grundlage der Zeitdifferenz zwischen dem zweiten Referenzzeitpunkt und dem Zielzeitpunkt.

7. Elektronische Vorrichtung nach einem der vorstehenden Ansprüche, wobei die Anweisungen ferner so konfiguriert sind, dass sie den einen oder die mehreren Prozessoren veranlassen zum:
Erzeugen standardmäßiger Merkmalsinterpolationsdaten auf der Grundlage der ersten Merkmalsdaten und der zweiten Merkmalsdaten; und
Bestimmen der Raum-Zeit-Merkmalsdaten auf der Grundlage der Merkmalsinterpolationsdaten und zusätzlicher Merkmalsinterpolationsdaten, die einem höheren Detaillierungsgrad (LOD) entsprechen, vorzugsweise durch Verkettung der standardmäßigen Merkmalsinterpolationsdaten und der zusätzlichen Merkmalsinterpolationsdaten.

8. Elektronische Vorrichtung nach Anspruch 7, wobei die Anweisungen ferner so konfiguriert sind, dass sie den einen oder die mehreren Prozessoren veranlassen zum:
Extrahieren von zusätzlichen Merkmalsdaten, die dem Zielzeitpunkt und dem Zielpunkt entsprechen, auf der Grundlage einer Vielzahl zusätzlicher Merkmalsextraktionsmodelle, die dem zusätzlichen LOD entsprechen; und
Erzeugen der zusätzlichen Merkmalsinterpolationsdaten auf der Grundlage der extrahierten zusätzlichen Merkmalsdaten; und
optional, wobei die Anweisungen ferner so konfiguriert sind, dass sie den einen oder die mehreren Prozessoren veranlassen zum:
Auswählen von zwei weiteren Merkmalsextraktionsmodellen aus der Vielzahl zusätzlicher Merkmalsextraktionsmodelle auf der Grundlage des Zielzeitpunkts; und
Extrahieren der zusätzlichen Merkmalsdaten unter Verwendung der zwei ausgewählten zusätzlichen Merkmalsextraktionsmodelle.

9. Elektronische Vorrichtung nach einem der vorstehenden Ansprüche, wobei das erste Merkmalsextraktionsmodell einem ersten Referenzzeitpunkt entspricht und das zweite Merkmalsextraktionsmodell einem zweiten Referenzzeitpunkt entspricht, und wobei das erste und zweite Merkmalsextraktionsmodell auf der Grundlage ausgewählt werden, dass ihre Referenzzeitpunkte zeitlich am nächsten zum Zielzeitpunkt liegen, unter den Referenzzeitpunkten, die jeweils den drei oder mehr Standardmerkmalsextraktionsmodellen entsprechen.

10. Elektronische Vorrichtung nach Anspruch 9, wobei die Anweisungen ferner so konfiguriert sind, dass sie den einen oder die mehreren Prozessoren veranlassen zum:
Auswählen des ersten Merkmalsextraktionsmodells und des zweiten Merkmalsextraktionsmodells aus fünf Standardmerkmalsextraktionsmodellen auf der Grundlage des Zielzeitpunkts; und
Auswählen von zwei zusätzlichen Merkmalsextraktionsmodellen aus zwanzig zusätzlichen Merkmalsextraktionsmodellen auf der Grundlage des Zielzeitpunkts.

11. Elektronische Vorrichtung nach einem der vorstehenden Ansprüche, wobei die Anweisungen ferner so konfiguriert sind, dass sie den einen oder die mehreren Prozessoren veranlassen zum:
Erzeugen einer Vielzahl von Szeneninformationen an Punkten entlang einer Blickrichtung von einem Sichtpunkt; und
Bestimmen, auf der Grundlage der erzeugten Szeneninformationen, eines Pixelwerts an einer Pixelposition, die der Blickrichtung in einer zweidimensionalen, 2D, Szene eines 3D-Raums zum Zielzeitpunkt aus einer bestimmten Sichtposition entspricht; und
optional, wobei die Anweisungen ferner so konfiguriert sind, dass sie den einen oder die mehreren Prozessoren veranlassen zum:
Erzeugen eines 2D-Bildes, das der 2D-Szene entspricht, indem die Pixelwerte aller in der 2D-Szene beinhaltenen Pixel bestimmt werden.

12. Prozessorimplementiertes Verfahren, wobei das Verfahren umfasst:
Extrahieren, aus Punktinformationen und Zeitinformationen, durch ein erstes Merkmalsextraktionsmodell, von ersten Merkmalsdaten für einen durch die Punktinformationen angegebenen Zielpunkt in einem dreidimensionalen (3D) Raum zu einem den Zeitinformationen entsprechenden Zielzeitpunkt;
Extrahieren, aus den Punktinformationen und den Zeitinformationen, durch ein zweites Merkmalsextraktionsmodell, von zweiten Merkmalsdaten für den Zielpunkt im 3D-Raum zum Zielzeitpunkt;
wobei das erste Merkmalsextraktionsmodell und das zweite Merkmalsextraktionsmodell aus drei oder mehr Standardmerkmalsextraktionsmodellen auf der Grundlage des Zielzeitpunkts oder auf der Grundlage eines Vergleichs zwischen dem Zielzeitpunkt und Referenzzeitpunkten, die jeweils den drei oder mehr Standardmerkmalsextraktionsmodellen entsprechen, ausgewählt werden;
Erhalten von Raum-Zeit-Merkmalsdaten auf der Grundlage der ersten Merkmalsdaten und der zweiten Merkmalsdaten; und
Erzeugen, durch ein Szeneninformationsschätzungsmodell, von Szeneninformationen über den Zielpunkt zum Zielzeitpunkt aus den Raum-Zeit-Merkmalsdaten und einer Blickrichtung.

13. Nichtflüchtiges, computerlesbares Speichermedium, das Anweisungen speichert, die, wenn sie von einem Prozessor ausgeführt werden, den Prozessor veranlassen, das Verfahren nach Anspruch 12 durchzuführen.

## Revendications

1. Dispositif électronique comprenant :
un ou plusieurs processeurs ;
une mémoire stockant un premier modèle d'extraction de caractéristiques, un second modèle d'extraction de caractéristiques, ledit premier modèle d'extraction de caractéristiques et ledit second modèle d'extraction de caractéristiques étant de préférence des modèles d'apprentissage automatique comprenant chacun une représentation par réseau neuronal ou par grille, un modèle d'estimation d'informations de scène et des instructions configurées pour, lorsqu'elles sont exécutées par les un ou plusieurs processeurs, amener les un ou plusieurs processeurs à :
à partir d'informations ponctuelles et d'informations temporelles, extraire, par le premier modèle d'extraction de caractéristiques, des premières données de caractéristiques pour un point cible indiqué par les informations ponctuelles dans un espace tridimensionnel, 3D, à un instant cible correspondant aux informations temporelles ;
à partir des informations ponctuelles et des informations temporelles, extraire, par le second modèle d'extraction de caractéristiques, des secondes données de caractéristiques pour le point cible dans l'espace 3D à l'instant cible ;
dans lequel le premier modèle d'extraction de caractéristiques et le second modèle d'extraction de caractéristiques sont sélectionnés parmi trois modèles d'extraction de caractéristiques par défaut ou plus sur la base de l'instant cible, ou sur la base d'une comparaison entre l'instant cible et les instants de référence correspondant respectivement aux trois modèles d'extraction de caractéristiques par défaut ou plus ;
obtenir des données de caractéristiques spatio-temporelles sur la base des premières données de caractéristiques et des secondes données de caractéristiques ; et
générer, par le modèle d'estimation d'informations de scène, des informations de scène sur le point cible à l'instant cible à partir des données de caractéristiques spatio-temporelles et d'une direction de vue.

2. Dispositif électronique selon la revendication 1, dans lequel les instructions sont en outre configurées pour amener les un ou plusieurs processeurs à :
réaliser une interpolation sur la base des premières données de caractéristiques et des secondes données de caractéristiques ; et
obtenir les données de caractéristiques spatio-temporelles sur la base du résultat de l'interpolation.

3. Dispositif électronique selon la revendication 1 ou 2,
dans lequel le premier modèle d'extraction de caractéristiques est un modèle entraîné pour un espace 3D à un premier instant de référence, et
dans lequel le second modèle d'extraction de caractéristiques est un modèle entraîné pour un espace 3D à un second instant de référence différent du premier instant de référence.

4. Dispositif électronique selon l'une quelconque des revendications précédentes, dans lequel les instructions sont en outre configurées pour amener les un ou plusieurs processeurs à :
déterminer les données de caractéristiques spatio-temporelles sur la base de l'interpolation des premières données de caractéristiques et des secondes données de caractéristiques sur la base d'un premier instant de référence, d'un second instant de référence et de l'instant cible.

5. Dispositif électronique selon la revendication 4, dans lequel les instructions sont en outre configurées pour amener les un ou plusieurs processeurs à réaliser l'interpolation en :
appliquant un premier poids déterminé sur la base du premier instant de référence et de l'instant cible aux secondes données de caractéristiques ; et
appliquant un second poids déterminé sur la base du second instant de référence et de l'instant cible aux premières données de caractéristiques.

6. Dispositif électronique selon la revendication 4 ou 5, dans lequel les instructions sont en outre configurées pour amener les un ou plusieurs processeurs à :
déterminer un premier poids sur la base d'une différence de temps entre le premier instant de référence et l'instant cible ; et
déterminer un second poids sur la base d'une différence de temps entre le second instant de référence et l'instant cible.

7. Dispositif électronique selon l'une quelconque des revendications précédentes, dans lequel les instructions sont en outre configurées pour amener les un ou plusieurs processeurs à :
générer des données d'interpolation de caractéristiques par défaut sur la base des premières données de caractéristiques et des secondes données de caractéristiques ; et
déterminer les données de caractéristiques spatio-temporelles sur la base des données d'interpolation de caractéristiques et de données d'interpolation de caractéristiques supplémentaires correspondant à un niveau de détail (LOD) supplémentaire, de préférence par concaténation des données d'interpolation de caractéristiques par défaut et des données d'interpolation de caractéristiques supplémentaires.

8. Dispositif électronique selon la revendication 7, dans lequel les instructions sont en outre configurées pour amener les un ou plusieurs processeurs à :
extraire des éléments de données de caractéristiques supplémentaires correspondant à l'instant cible et au point cible, sur la base d'une pluralité de modèles d'extraction de caractéristiques supplémentaires correspondant au LOD supplémentaire ; et
générer les données d'interpolation de caractéristiques supplémentaires sur la base des éléments de données de caractéristiques supplémentaires extraits ; et
éventuellement, dans lequel les instructions sont en outre configurées pour amener les un ou plusieurs processeurs à :
sélectionner deux modèles d'extraction de caractéristiques supplémentaires parmi la pluralité de modèles d'extraction de caractéristiques supplémentaires sur la base de l'instant cible ; et
extraire les éléments des données de caractéristiques supplémentaires à l'aide des deux modèles d'extraction de caractéristiques supplémentaires sélectionnés.

9. Dispositif électronique selon l'une quelconque des revendications précédentes, dans lequel le premier modèle d'extraction de caractéristiques correspond à un premier instant de référence et le second modèle d'extraction de caractéristiques correspond à un second instant de référence, et dans lequel les premier et second modèles d'extraction de caractéristiques sont sélectionnés sur la base du fait que leurs instants de référence sont temporellement les plus proches de l'instant cible parmi les instants de référence correspondant respectivement aux trois modèles d'extraction de caractéristiques par défaut ou plus.

10. Dispositif électronique selon la revendication 9, dans lequel les instructions sont en outre configurées pour amener les un ou plusieurs processeurs à :
sélectionner le premier modèle d'extraction de caractéristiques et le second modèle d'extraction de caractéristiques parmi cinq modèles d'extraction de caractéristiques par défaut sur la base de l'instant cible ; et
sélectionner deux modèles d'extraction de caractéristiques supplémentaires parmi vingt modèles d'extraction de caractéristiques supplémentaires sur la base de l'instant cible.

11. Dispositif électronique selon l'une quelconque des revendications précédentes, dans lequel les instructions sont en outre configurées pour amener les un ou plusieurs processeurs à :
générer une pluralité d'éléments d'informations de scène sur des points situés selon une direction de vue à partir d'un point de vue ; et
sur la base des éléments d'informations de scène générés, déterminer une valeur de pixel d'une position de pixel correspondant à la direction de vue dans une scène bidimensionnelle, 2D, d'un espace 3D à l'instant cible observé depuis une position de vue ;
éventuellement, dans lequel les instructions sont en outre configurées pour amener les un ou plusieurs processeurs à :
générer une image 2D correspondant à la scène 2D en déterminant des valeurs de pixels de tous les pixels inclus dans la scène 2D.

12. Procédé mis en œuvre par processeur, le procédé comprenant :
à partir d'informations ponctuelles et d'informations temporelles, l'extraction, par un premier modèle d'extraction de caractéristiques, de premières données de caractéristiques pour un point cible indiqué par les informations ponctuelles dans un espace tridimensionnel (3D) à un instant cible correspondant aux informations temporelles ;
à partir des informations ponctuelles et des informations temporelles, l'extraction, par un second modèle d'extraction de caractéristiques, de secondes données de caractéristiques pour le point cible dans l'espace 3D à l'instant cible ;
dans lequel le premier modèle d'extraction de caractéristiques et le second modèle d'extraction de caractéristiques sont sélectionnés parmi trois modèles d'extraction de caractéristiques par défaut ou plus sur la base de l'instant cible, ou sur la base d'une comparaison entre l'instant cible et les instants de référence correspondant respectivement aux trois modèles d'extraction de caractéristiques par défaut ou plus ;
l'obtention de données de caractéristiques spatio-temporelles sur la base des premières données de caractéristiques et des secondes données de caractéristiques ; et
la génération, par un modèle d'estimation d'informations de scène, d'informations de scène sur le point cible à l'instant cible à partir des données de caractéristiques spatio-temporelles et d'une direction de vue.

13. Support de stockage non transitoire lisible par ordinateur stockant des instructions qui, lorsqu'elles sont exécutées par un processeur, amènent le processeur à réaliser le procédé selon la revendication 12.
